# EUROPEAN PATENT APPLICATION

(11) **EP 3 226 325 A1**
(43) Date of publication of application: **04.10.2017**
(21) Application number: 17164420.6
(22) Date of filing: 31.03.2017
(51) Int. Cl.: H01M 2/16, H01M 10/0525

(54) **LITHIUM ION BATTERY AND SEPARATOR THEREOF**

(30) Priority: 01.04.2016 CN 201610204611
(71) Applicant: NingDe Amperex Technology Limited, Ningde City, Fujian 352100 (CN)
(72) Inventor: Chen, Shi tong, Ningde, Fujian 352100 (CN); Tao, Xing hua, Ningde, Fujian 352100 (CN); Zhang, Sheng wu, Ningde, Fujian 352100 (CN); Cheng, Wen qiang, Ningde, Fujian 352100 (CN)
(74) Representative: Bumke, Jakob Wenzel

(57) **Abstract**

The present invention provides a separator for a lithium ion battery. The separator includes a substrate, an inorganic coating on at least one surface of the substrate, and an organic coating on at least one surface of the inorganic coating, wherein the coating density of the organic coating is 0.1mg/1540.25mm²∼10mg/1540.25mm². Compared with the prior art, the separator of the present invention can improve the deformation of the lithium ion battery and enhance the expansion force that the lithium ion battery can endure, thereby improving the cycle life of the lithium ion battery. In addition, the present invention also provides a lithium ion battery having the separator of the present invention.

## Description

### TECHNICAL FIELD

The present application generally relates to lithium ion batteries, and more particularly, relates to a lithium ion battery having desirable circle performance and separator thereof.

### BACKGROUND

As an important part of a lithium-ion battery, separator has a significant effect on the cycle life of the lithium-ion battery. Conventional separator of a lithium ion battery generally includes a substrate, an inorganic coating disposed on at least one surface of the substrate, and an organic coating disposed on at least one surface of the inorganic coating.

During the use of a lithium ion battery, the cathode plate and the anode plate will expand. With the gradual expansion of the cathode plate and the anode plate, the expansion force the battery cell endures will increase gradually, which will lead to squeeze of the plates and further affect the circle performance and the safety performance of the lithium ion battery. At the same time, during the preparation of the separator, loose distribution of the particles in the coating will lead to slight wrinkle of the separator after coating and winding (coating machine and up-coiler has a certain tension), where the island and/or strip morphology organic coating falls into the slight wrinkle, equaling to compress the coating, which will affect the consistency of the thickness of the organic coating on the substrate and further affect the expansion force the lithium ion battery can endure as well as the circle performance and the safety performance of the lithium ion battery.

In view of the foregoing, what is needed, therefore, is to provide a lithium ion battery which can endure high expansion force as well as has desirable circle performance and safety performance and the separator thereof.

### BRIEF SUMMARY OF VARIOUS EMBODIMENTS OF THE INVENTION

After researching and experimental analyzing by inventors of the present invention, it is found that expansion force that a lithium ion battery can endure, cycle performance and the safety performance of a lithium-ion battery relate to: the coating density of the organic coating of the separator, the thickness of the organic coating, the content and type of organic polymer particles and/or organic polymer emulsion in the organic coating, the particle size of organic polymer particles in the organic coating, the content of binder in the organic coating, the thickness of the substrate, and the thickness of the inorganic coating.

In view of the foregoing, one object of the present invention is to provide a lithium ion battery which can endure high expansion force as well as has desirable circle performance and safety performance and the separator thereof.

According to one embodiment of the present invention, a separator for a lithium ion battery, includes a substrate and an organic coating disposed directly or indirectly on at least one surface of the substrate, wherein a coating density of the organic coating is 0.1mg/1540.25mm² to 10mg/1540.25mm².

According to one aspect of the present invention, the organic coating contains organic polymer particles and/or organic polymer emulsion and binder.

According to one aspect of the present invention, a particle size D50 of the organic polymer particles and/or organic polymer emulsion is 1µm~150µm, and crystallinity of the organic polymer particles and/or organic polymer emulsion is less than 85%.

According to one aspect of the present invention, a weight content of the organic polymer particles and/or organic polymer emulsion is 5%~95% and a weight content of the binder is 5%~95%.

According to one aspect of the present invention, the organic polymer particles and/or organic polymer emulsion are selected from a group consisting of polyvinylidene fluoride, vinylidene fluoride-hexafluoropropylene polymer, styrene butadiene polymer and polyacrylic acid, and the binder is selected from a group consisting of polyamide, polyacrylonitrile, polyacrylic ester, polyacrylate, hydroxy methyl cellulose, polyvinyl pyrrolidone, ethyl acetate, phenyl ether, polyvinyl ether, vinyl carbonate, glycerol polyglycidyl ether, propylene carbonate, acetone, and pure acrylic emulsion.

According to one aspect of the present invention, the substrate is PE, PP, non-woven fabrics, PET, PVDF, PU, PA, PI, organic and inorganic blend membrane, or PP/PE/PP.

According to one aspect of the present invention, at least one surface of the substrate is coated with an inorganic coating, the organic coating is disposed on at least one surface of the inorganic coating, and the organic coating has a gap providing ability of 1~150µm for a winded and heat pressed battery cell.

According to one aspect of the present invention, the organic coating covers 1%~95% of the surface of the substrate or the inorganic coating.

According to one aspect of the present invention, the inorganic coating includes inorganic particles and binder, a weight content of the inorganic particles is 5~95wt%, and a weight content of the binder is 5~95wt%.

According to one embodiment of the present invention, a lithium ion battery includes a cathode plate, an anode plate, a separator of the present invention between the cathode plate and the anode plate.

Compared with the prior art, the separator of the present invention can provide a gap equivalent to coating a layer of organic layer on the porous separator, which can provide a space for cyclic expansion of the plates of the lithium ion battery, so as to improve the gap providing ability of the battery cell and improve the cycle life and the safety performance of the lithium ion battery.

Other advantages and novel features will be drawn from the following detailed description of preferred embodiments with the attached drawings. The accompanying drawings, which are incorporated in and constitute a part of this specification, illustrate embodiments of the present invention and, together with a general description of the invention given above, and the detailed description of the embodiments given below, serve to explain the principles of the invention:

### BRIEF DESCRIPTION OF THE DRAWINGS

Fig.1 shows a cross-sectional view of a battery cell for use in a lithium ion battery according to one embodiment of the present invention; and
Fig. 2 shows a cross-sectional view of a separator for use in a lithium ion battery according to one embodiment of the present invention.

### DETAILED DESCRIPTION OF VARIOUS EMBODIMENTS OF THE INVENTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

### Performance Test

### Lithium precipitation test at low temperature:

1) placing the lithium ion battery at 10 °C for 2 hours;
2) standing the lithium ion battery for 5 minutes;
3) charging the lithium ion battery to 4.35 V at a constant current of 0.35 C;
4) standing the lithium ion battery for 5 minutes;
5) discharging the lithium ion battery to 3.0V at a constant current of 0.5 C; and
6) repeating step 2 to step 5 for 10 times, disassembling the lithium ion battery and checking whether lithium precipitation occurs at the surface of the anode.

### Cycle life test:

1) placing the lithium ion battery at 60 °C for 2 hours;
2) standing the lithium ion battery for 5 minutes;
3) charging the lithium ion battery to 4.2V at a constant current of 2C, then charging the lithium ion battery to 0.05C at a constant voltage of 4.2V;
4) standing the lithium ion battery for 10 minutes;
5) discharging the lithium ion battery to 2.8V at a constant current of 3C; and
6) repeating step 2 to step 5, until the capacity of the battery cell is less than 70%.

### Gap providing ability test of a battery cell:

In the present patent application, gap refers to the thickness of the organic coatings on two layers of separator contacting the plate. More specifically, gap refers to the thickness of the organic coating at an end surface of a winded and hot pressed battery cell. Gap measurement can be calculated according to the following formula:
Gap=(L1-L2)/number of layers, Gap may be defined as the average coating thickness of each layer of separator available for expansion at the end surface of a bare battery cell.

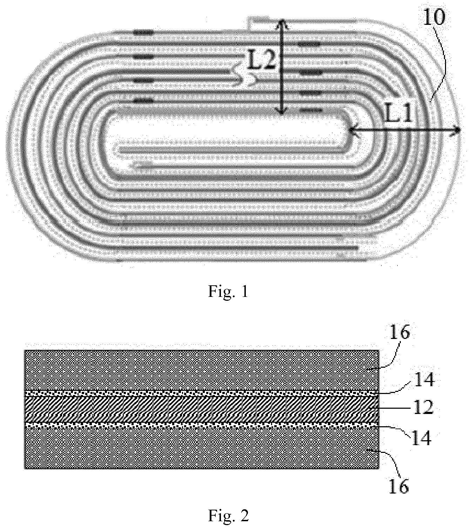

Referring to Figure 1, a winded-type lithium ion battery cell can be divided into an arc area and a flat area, wherein, L1 is the distance between the innermost layer to the outermost layer of the arc area; L2 is the distance between the innermost layer to the outermost layer of the flat area having the same number of winding layers as that of the arc area; number of layers is the number of layers of the separator in the arc area.

In various embodiments of the present invention, the measurement of gap can be carried out on GE Phoenix v | tome | x S 240 CT equipment of Shanghai Yinghua Detection Technology Co., Ltd. After scanning of the CT equipment, L1, L2 can be tested by computer measurement software, and gap can be obtained according to the formula above.

Referring to Fig. 2, a separator 10 for a lithium ion battery according to the present invention includes a separator substrate 12, an inorganic coating 14 disposed on one or two surfaces of the substrate 12, and organic coating 16 disposed on at least one inorganic coating 14. According to other embodiment of the present invention, the separator 10 does not has an inorganic coating 14, and the organic coating 16 is directly disposed on one or two surfaces of the substrate 12.

### Embodiments 1-1 to 1-4 and Comparative embodiments 1-1 to 1-2

### Embodiment 1-1

Preparation of the anode plate: uniformly mixing anode active material NCM (Ni: Co: Mn=4: 3: 3), conducting agent conductive carbon, and binder polyvinylidene fluoride (PVDF) at a weight ratio of 96: 2: 2 and obtaining an anode slurry of the lithium ion battery; evenly coating the anode slurry on an anode current collector of aluminum foil; drying the anode current collector coated with the anode slurry at 85 °C, cold pressing the anode current collector, and cutting and slitting the anode current collector; then drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector is dried at 85°C; drying the cathode current collector at 110°C for 4 hours under vacuum condition; and then welding cathode leads, so as to obtain the cathode plate of the lithium ion battery.

Preparation of the separator: using a polyethylene microporous film having a thickness of 16µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer, and dispersing the mixture at 25°C for 3 hours;
Step 2: adding 30Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, the coating density is 5mg/cm². The thickness of the inorganic coating is 4µm. The inorganic coating covers 90% of the porous separator substrate.

Preparation of the organic coating slurry: the organic coating slurry contains 5 parts by weight of polyvinylidene fluoride powder, 40 parts by weight of acetone solvent and 55 parts by weight of ethyl acetate. The method for preparing the organic coating slurry includes the steps of:
Step 1: adding 95 Kg of the above-mentioned mixture of acetone and ethyl acetate into a 100 L double-planetary mixer and dispersing the mixture at 25°C for 1.5 hours;
Step 2: adding 5 Kg of the polyvinylidene fluoride powder into the mixture and dispersing the mixture at 35 °C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the organic coating in an oven having a length of 10m and a temperature of 55°C. The coating speed is 25 m/min, the coating density of the organic coating is 0.1mg/1540.25 mm². The thickness of the organic coating is 30µm. After drying, the organic coating on the inorganic coating and the separator substrate has a form of island and linear morphology, the organic coating covers 50% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are winded into a lithium ion battery cell. The electrolyte is injected. After packaging, molding, and formation processes, a lithium ion battery is obtained.

Referring to Table 1, preparation of embodiments 1-2 to 1-4 and comparative embodiments 1-1 to 1-2 is similar to that of embodiment 1-1, wherein the separator substrate, the thickness of the substrate, the thickness of the inorganic coating, the thickness of the organic coating, the particle size D50 of the particles in the organic polymer particles and/or the polymer emulsion are the same as the separator substrate, the thickness of the substrate, the thickness of the inorganic coating, the thickness of the organic coating, the particle size D50 of the particles in the organic polymer particles and/or the polymer emulsion in embodiment 1-1, except for the coating density of the organic coating.

**Table 1 Effect of coating density of the organic coating**

| | Experimental group and process parameters | | | | | | Experimental results | | |
|---|---|---|---|---|---|---|---|---|---|
| | Separator substrate | Thickness of the substrate (µm) | Thickness of the inorganic coating (µm) | Thickness of the organic coating (µm) | Particle size D50 of the particles in the organic polymer particles (D50: µm) | Coating density of the organic coating (mg/mm²) | Lithium precipitation (10°C @0.35C/0.5C) | Gap providing ability of the battery cell (µm) | Cycle life (60deg @2C/3C ) |
| Embodiment 1-1 | PP | 16 | 4 | 30 | 5-10 | 0.1/1540.25 | No lithium precipitation at low temperature | 30 | 1000 |
| Embodiment 1-2 | PP | 16 | 4 | 30 | 5-10 | 2.0/1540.25 | No lithium precipitation at low temperature | 55 | 1000 |
| Embodiment 1-3 | PP | 16 | 4 | 30 | 5-10 | 5.0/1540.25 | No lithium precipitation at low temperature | 60 | 1200 |
| Embodiment 1-4 | PP | 16 | 4 | 30 | 5-10 | 10.0/1540.2 5 | No lithium precipitation at low temperature | 60 | 1000 |
| Comparative embodiment 1-1 | PP | 16 | 4 | 30 | 5-10 | 11.0/1540.2 5 | slight lithium precipitation at low temperature | 60 | 400 |
| Comparative embodiment 1-2 | PP | 16 | 4 | 30 | 5-10 | 0.05/1540.2 5 | No lithium precipitation at low temperature | 5 | 300 |

As can be seen from Table 1, on condition that the separator substrate, the thickness of the substrate, the thickness of the inorganic coating, the thickness of the organic coating, the particle size D50 of the particles in the organic polymer particles and/or the polymer emulsion are the same, different coating densities of the organic coating affects the gap providing ability of the separator and the cycle capacity of the lithium ion battery as following.
1. When the coating density of the organic coating is too high (more than 10.0mg/1540.25mm²), the organic coating has strong gap providing ability. However, the dense distribution of the organic coating will lead to reduction of ion conductivity of the separator in the charging and discharging process of the lithium ion battery. Dark spots and lithium precipitation at low temperature occur on the surface of the separator. Contribution of the organic coating to the circle life of the lithium ion battery reduces.
2. When the coating density of the organic coating is too low (less than 0.1mg/1540.25mm²), the distribution of the organic coating is too loose, and the island and/or strip morphology coating of the organic coating has great effect on the formation of slight wrinkle on the separator substrate. The battery cell has poor gap providing ability. The lithium ion battery has poor ability to endure the expansion force. Contribution to the cycle life of the lithium ion battery is reduced;
3. When the coating density of the organic coating is within 0.1mg/1540.25mm² to 10.0mg/1540.25mm², the island and/or strip morphology coating of the organic coating has desirable gap providing ability. The organic coating can endure higher expansion force. At the same time, no lithium precipitation at low temperature occurs at the anode plate, which can improve the cycle life of the lithium ion battery. In addition, there is a linear relationship between the coating density of the organic coating and the gap providing ability. The greater the coating density is, the stronger the gap providing ability is.

### Embodiments 2-1 to 2-4 and comparative embodiments 2-1 to 2-2

### Embodiment 2-1

Preparation of the anode plate: uniformly mixing anode active material NCM (Ni: Co: Mn=4: 3: 3), conducting agent conductive carbon, and binder polyvinylidene fluoride (PVDF) at a weight ratio of 96: 2: 2 and obtaining the anode slurry of the lithium ion battery; evenly coating the anode slurry on an anode current collector of aluminum foil; drying the anode current collector coated with the anode slurry at 85°C, cold pressing the anode current collector, and cutting and slitting the anode current collector; drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector dried at 85°C; drying the current collector at 110°C for 4 hours under vacuum condition; and then welding cathode leads, to obtain the cathode plate of the lithium ion battery.

Preparation of the separator: using a polyethylene microporous film having a thickness of 16µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer, and dispersing the mixture at 25°C for 3 hours;
Step 2: adding 30Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, and the coating density is 5mg/cm². The thickness of the inorganic coating is 4µm. The inorganic coating covers 80% of the porous separator substrate.

Preparation of the organic coating slurry: the organic coating slurry contains 20 parts by weight of polyacrylic acid, 40 parts by weight of polyacrylates, and 40 parts by weight of pure acrylic emulsion. The method for preparing the organic coating slurry includes the steps of:
Step 1: adding 80 Kg of the above-mentioned mixture of polyacrylates and pure acrylic emulsion into a 100 L double-planetary mixer and dispersing the mixture at 25 °C for 1.5 hours;
Step 2: adding 20 Kg of the polyacrylic acid into the mixture and dispersing the mixture at 25°C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the organic coating with an oven having a length of 10m and a temperature of 55°C. The coating speed is 25 m/min, the coating density of the organic coating is 1mg/1540.25mm², the thickness of the organic coating is 1µm. After drying, the organic coating on the inorganic coating and the separator substrate has a form of island and linear morphology, the organic coating covers 70% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are winded into a lithium ion battery cell. The electrolyte is injected. After packaging, molding, and formation processes, a lithium-ion battery is obtained.

Referring to Table 2, preparation of embodiments 2-2 to 2-4 and comparative embodiments 2-1 to 2-2 is similar to that of embodiment 2-1, wherein the separator substrate, the thickness of the substrate, the thickness of the inorganic coating, the particle size D50 of the particles in the organic polymer particles and/or the polymer emulsion, and the coating density of the organic coating are the same as the separator substrate, the thickness of the substrate, the thickness of the inorganic coating, the particle size D50 of the particles in the organic polymer particles and/or the polymer emulsion, and the coating density of the organic coating in embodiment 2-1, except for the thickness of the organic coating.

**Table 2 Effect of the Thickness of the Organic Coating**

| | Experimental group and process parameters | | | | | | Experimental results | | |
|---|---|---|---|---|---|---|---|---|---|
| | Separator substrate | Thickness of the substrate (µm) | Thickness of the inorganic coating (µm) | Thickness of the organic coating (µm) | Particle size D50 of the particles in the organic polymer particles (D50: µm) | Coating density of the organic coating (mg/mm²) | Lithium precipitation (10°C @0.35C/0.5C) | Gap providing ability of the battery cell (µm) | Cycle life (60deg @2C/3C ) |
| Embodiment 2-1 | PE | 16 | 4 | 1 | 5-10 | 1/1540.25 | No lithium precipitation at low temperature | 1 | 400 |
| Embodiment 2-2 | PE | 16 | 4 | 30 | 5-10 | 1/1540.25 | No lithium precipitation at low temperature | 48 | 1000 |
| Embodiment 2-3 | PE | 16 | 4 | 100 | 5-10 | 1/1540.25 | No lithium precipitation at low temperature | 140 | 1000 |
| Embodiment 2-4 | PE | 16 | 4 | 200 | 5-10 | 1/1540.25 | No lithium precipitation at low temperature | 350 | 1000 |
| Comparative embodiment 2-1 | PE | 16 | 4 | 250 | 5-10 | 1/1540.25 | Serious lithium precipitation at low temperature | 460 | 300 |
| Comparative embodiment 2-2 | PE | 16 | 4 | 0.5 | 5-10 | 1/1540.25 | No lithium precipitation at low temperature | 0 | 220 |

As can be seen from Table 2, on condition that the separator substrate, the thickness of the substrate, the thickness of the inorganic coating, the particle size D50 of the particles in the organic polymer particles and/or the polymer emulsion, the coating density of the organic coating are the same, different thickness of the organic affects the gap providing ability of the separator and the cycle capacity of the lithium ion battery as following.
1. When the thickness of the organic coating is too large (more than 200µm), the battery cell has too strong actual gap providing ability. If the thickness of the organic coating is too large, the ion channels become longer, which will lead to reduction of the ion conductivity of the separator in charging and discharging process of the lithium ion battery. Dark spots and lithium precipitation at low temperature occur on the surface of the separator. Contribution of the organic coating to the improvement of the circle life of the lithium ion battery is reduced.
2. When the thickness of the organic coating is too small (less than 1µm), the battery cell almost has no actual gap providing ability. The organic coating can hardly enhance the ability of enduring the expansion force of the lithium ion battery. In this regard, the organic coating almost does not contribute to the improvement of the cycle capacity of the lithium ion battery.
3. When the thickness of the organic coating is between 1-200µm, island and/or strip morphology coating of the organic coating has expected gap providing ability. The organic coating can endure higher expansion force. No lithium precipitation at low-temperature occurs at the anode plate. The circle life of the lithium ion battery is improved.

### Embodiments 3-1 to 3-4 and comparative embodiments 3-1 to 3-2

### Embodiment 3-1

Preparation of the anode plate: uniformly mixing anode active material NCM (Ni: Co: Mn=4: 3: 3), conducting agent conductive carbon, and binder polyvinylidene fluoride (PVDF) at a weight ratio of 96: 2: 2 and obtaining the anode slurry of the lithium ion battery; evenly coating the anode slurry on an anode current collector of aluminum foil; drying the anode current collector coated with the anode slurry at 85°C, cold pressing the anode current collector, and cutting and slitting the anode current collector; drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector dried at 85°C; drying the cut current collector at 110°C for 4 hours under vacuum condition; and then welding cathode leads, so as to obtain the cathode plate of the lithium ion battery.

Preparation of the separator: using a polyethylene microporous film having a thickness of 16µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer, and dispersing the mixture at 25°C for 3 hours;
Step 2: adding 30 Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, and the coating density is 2.5mg/cm². The thickness of the organic coating is 4µm. The inorganic coating covers 50% of the porous separator substrate.

Preparation of the organic coating slurry: the organic coating slurry contains 5 parts by weight of polyacrylate, 40 parts by weight of polyamide and 55 parts by weight of polyacrylonitrile. The method for preparing the organic coating slurry includes the steps of:
Step 1: adding 95Kg of the above-mentioned mixture of polyamide and polyacrylonitrile into a 100 L double-planetary mixer and dispersing the mixture at 25 °C for 1.5 hours;
Step 2: adding 5 Kg of the polyacrylate into the mixture and dispersing the mixture at 35 °C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the inorganic coating in an oven having a length of 10m and a temperature of 55°C. The coating speed is 25m/min, the coating density of the organic coating is 1mg/1540.25 mm², the thickness of the organic coating is 30µm. After drying, the organic coating on the inorganic coating and the separator substrate has a form of island and linear morphology. The organic coating covers 50% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are winded into a lithium ion battery cell. The electrolyte is injected. After packaging, molding, and formation processes, a lithium-ion battery is obtained.

Referring to Table 3, preparation of embodiments 3-2 to 3-4 and comparative embodiments 3-1 to 3-2 is similar to that of embodiment 3-1, wherein the separator substrate, the thickness of substrate, the thickness of the inorganic coating, the thickness of the organic coating, the coating density of the organic coating are the same as the separator substrate, the thickness of the substrate, the thickness of the inorganic coating, the thickness of the organic coating, the coating density of the organic coating in embodiment 3-1, except for the content of the organic polymer particles and/or the polymer emulsion in the organic coating.

**Table 3 Effect of content of the organic polymer particles and/or the polymer emulsion in the organic coating**

| | Experimental group and process parameters | | | | | | Experimental results | | |
|---|---|---|---|---|---|---|---|---|---|
| | Separator substrate | Thickness of the substrate (µm) | Thickness of the inorganic coating (µm) | Thickness of the organic coating (µm) | Content of the organic polymer particles and/or the polymer emulsion (wt) | Coating density of the organic coating (mg/mm²) | Lithium precipitation (10°C @0.35C/0.5C) | Gap providing ability of the battery cell (µm) | Cycle life (60deg @2C/3C ) |
| Embodiment 3-1 | PE | 16 | 4 | 30 | 5.0% | 1/1540.25 | No lithium precipitation at low temperature | 30 | 800 |
| embodiment 3-2 | PE | 16 | 4 | 30 | 40.0% | 1/1540.25 | No lithium precipitation at low temperature | 48 | 1000 |
| embodiment 3-3 | PE | 16 | 4 | 30 | 55.0% | 1/1540.25 | No lithium precipitation at low temperature | 55 | 1000 |
| embodiment 3-4 | PE | 16 | 4 | 30 | 95.0% | 1/1540.25 | No lithium precipitation at low temperature | 60 | 1000 |
| comparative embodiment 3-1 | PE | 16 | 4 | 30 | 98.0% | 1/1540.25 | Slight lithium precipitation at low temperature lithium | 60 | 450 |
| comparative embodiment 3-2 | PE | 16 | 4 | 30 | 2.0% | 1/1540.25 | No lithium precipitation at low temperature | 5 | 400 |

As can be seen from Table 3, on condition that the separator substrate, the thickness of the substrate, the thickness of the inorganic coating, the thickness of the organic coating, the coating density of the organic coating, different contents of the organic polymer particles and/or the polymer emulsion in the organic coating affect the gap providing ability of the separator and the cycle capacity of the lithium ion battery as following.
1. When the content of the organic polymer particles and/or the polymer emulsion in the organic coating is too high (more than 95 wt%), at the same coating density of the organic coating, the organic coating distribution is too dense, which will lead to decrease of ion conductivity of the separator during the charging and discharging process of the lithium ion battery. Dark spots and lithium precipitation at low temperature occurs on the surface of the separator. Contribution of the organic coating to the cycle capability of the lithium ion battery is reduced;
2. When the content of the organic polymer particles and/or the polymer emulsion in the organic coating is too low (less than 5 wt%), at the same coating density of the organic coating, the organic coating distribution is too loose, which will result in the island and/or strip morphology coating of the organic coating having great impact on the formation of slight wrinkle on the separator. The actual gap providing ability of the battery cell does not accord with the theoretical value, which can hardly improve the ability of enduring expansion force of the lithium ion battery and can hardly contribute to the improvement of the circle life of the lithium ion battery;
3. When the content of the organic polymer particles and/or the polymer emulsion in the organic coating is between 5-95wt%, island and/or strip morphology coating of the organic coating has expected gap providing ability. The organic coating can endure higher expansion force. No lithium precipitation at low-temperature occurs at the anode plate. The circle life of the lithium ion battery is improved.

### Embodiments 4-1 to 4-4 and comparative embodiments 4-1 to 4-2

### Embodiment 4-1

Preparation of the anode plate: uniformly mixing anode active material NCM (N: C: M=4: 3: 3), conducting agent conductive carbon, and binder polyvinylidene fluoride (PVDF) at a weight ratio of 96: 2: 2 and obtaining the anode slurry of the lithium ion battery; evenly coating the anode slurry on an anode current collector of aluminum foil; drying the anode current collector coated with the anode slurry at 85°C, cold pressing the anode current collector, and cutting and slitting the anode current collector; drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector dried at 85°C; drying the current collector at 110°C for 4 hours under vacuum condition; and then welding cathode leads, so as to obtain the cathode plate of the lithium ion battery.

Preparation of the separator: using a polyethylene microporous film having a thickness of 16µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer and dispersing the mixture at 25°C for 3 hours;
Step 2: adding 30Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, and the coating density is 2.5mg/cm². The thickness of the inorganic coating is 4µm. The inorganic coating covers 50% of the porous separator substrate.

Preparation of the organic coating slurry: the organic coating slurry contains 45 parts by weight of polyvinylidene fluoride polymer (D50: 5-10 µm), 30 parts by weight of polyamide and 25 parts by weight of polyacrylonitrile. The method for preparing the organic coating slurry includes the steps of:
Step 1: adding 55Kg of the above-mentioned mixture of polyamide and polyacrylonitrile into a 100 L double-planetary mixer and dispersing the mixture at 25°C for 1.5 hours;
Step 2: adding 45Kg of the polyvinylidene fluoride polymer into the mixture and dispersing the mixture at 35 °C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the organic coating in an oven having a length of 10m and a temperature of 55°C. The coating speed is 25 m/min, the coating density of the organic coating is 1mg/1540.25 mm², the thickness of the organic coating is 30µm. After drying, the organic coating on the inorganic coating and the separator substrate has a form of island and linear morphology, the organic coating covers 75% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are wound into a lithium ion battery cell. The electrolyte is injected. After packaging, molding, and formation processes, a lithium-ion battery is obtained.

Referring to Table 4, preparation of embodiments 4-2 to 4-4 and comparative embodiments 4-1 to 4-2 is similar to that of embodiment 4-1, wherein, the separator substrate, the thickness of the substrate, the thickness of the inorganic coating, the thickness of the organic coating, the coating density of the organic coating are the same as the separator substrate, the thickness of the substrate, the thickness of the inorganic coating, the thickness of the organic coating, the coating density of the organic coating in embodiment 4-1, except for the particle size D50 of the particles in the organic polymer particles and/or the polymer emulsion.

**Table 4 Effect of particle size D50 of the particles in the organic polymer particles and/or the polymer emulsion**

| | Experimental group and process parameters | | | | | | Experimental results | | |
|---|---|---|---|---|---|---|---|---|---|
| | Separator substrate | Thickness of the substrate (µm) | Thickness of the inorganic coating (µm) | Thickness of the organic coating (µm) | Particle size of the organic polymer (D50: µm) | Coating density of the organic coating (mg/mm²) | Lithium precipitation (10°C @0.35C/0.5C) | Gap providing ability of the battery cell (µm) | Cycle life (60deg @2C/3C ) |
| Embodiment 4-1 | PE | 16 | 4 | 30 | 5-10 | 1/1540.25 | No lithium precipitation at low temperature | 30 | 1000 |
| Embodiment 4-2 | PE | 16 | 4 | 30 | 20-30 | 1/1540.25 | No lithium precipitation at low temperature | 48 | 1000 |
| Embodiment 4-3 | PE | 16 | 4 | 30 | 60-80 | 1/1540.25 | No lithium precipitation at low temperature | 80 | 1000 |
| Embodiment 4-4 | PE | 16 | 4 | 30 | 95.0% | 1/1540.25 | No lithium precipitation at low temperature | 140 | 800 |
| Comparative embodiment 4-1 | PE | 16 | 4 | 30 | 100-150 | 1/1540.25 | Slight lithium precipitation at low temperature | 200 | 500 |
| Comparative embodiment 4-2 | PE | 16 | 4 | 30 | 200 | 1/1540.25 | No lithium precipitation at low temperature | 5 | 400 |

As can be seen from Table 4, on condition that the separator substrate, the thickness of the substrate, the thickness of the inorganic coating, the thickness of the organic coating, the coating density of the organic coating are the same, different particle sizes D50 of the particles in the organic polymer particles and/or the polymer emulsion affect the gap providing ability of the separator and the cycle capacity of the lithium ion battery as following.
1. When the particle size of the organic polymer particles in the organic coating is too big (D50 is more than 150µm), at the same coating density of the organic coating, the organic coating is too thick, which will lead to increase of the ion channel distance during the charging and discharging process of the lithium ion battery and reduction of the ion conductivity. Dark spots and lithium precipitation at low temperature occurs on the surface of the separator. Internal resistance of the lithium ion battery increases, which has adverse affect on the performances of the lithium ion battery. Contribution of the organic coating to the improvement of the cycle capability of the lithium ion battery is reduced;
2. When the particle size of the organic polymer particles in the organic coating is too small (D50 is less than 1µm), at the same coating density of the organic coating, the thickness of the organic coating cannot meet the requirements. The actual gap providing ability of the battery cell does not accord with the theoretical value, which can hardly improve the ability of enduring expansion force of the lithium ion battery, and can hardly contribute to the improvement of the circle life of the lithium ion battery;
3. When the particle size (D50) of the organic polymer particles in the organic coating is between 1-150µm, island and/or strip morphology coating of the organic coating has expected gap providing ability. The organic coating can endure higher expansion force. No lithium precipitation at low-temperature occurs at the anode plate. The circle life of the lithium ion battery is improved.

### Embodiments 5-1 to 5-3 and comparative embodiments 5-1 to 5-2

### Embodiment 5-1

Preparation of the anode plate: uniformly mixing anode active material NCM (N: C: M=4: 3: 3), conducting agent conductive carbon, and binder polyvinylidene fluoride (PVDF) at a weight ratio of 96: 2: 2 and obtaining the anode slurry of the lithium ion battery; evenly coating the anode slurry on an anode current collector of aluminum foil; drying the anode current collector coated with the anode slurry at 85°C, cold pressing the anode current collector, and cutting and slitting the anode current collector; drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector dried at 85°C; drying the current collector at 110°C for 4 hours under vacuum condition; and then welding cathode leads, so as to obtain the cathode plate of the lithium ion battery.

Preparation of the separator: using a polyethylene microporous film having a thickness of 16µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer and dispersing the mixture at 25°C for 3 hours;
Step 2: adding 30Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, and the coating density is 5mg/cm². The thickness of the organic coating is 4µm. The inorganic coating covers 95% of the porous separator substrate.

Preparation of the organic coating slurry: the organic coating slurry contains 95 parts by weight of styrene-butadiene polymer, 2 parts by weight of polyamide and 3 parts by weight of polyacrylonitrile. The method for preparing the organic coating slurry includes the steps of:
Step 1: adding 5 Kg of the above-mentioned mixture of polyamide and polyacrylonitrile into a 100 L double-planetary mixer and dispersing the mixture at 25°C for 1.5 hours;
Step 2: adding 95 Kg of the styrene-butadiene polymer into the mixture and dispersing the mixture at 25°C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the inorganic coating with an oven having a length of 10m and a temperature of 55°C. The coating speed is 25 m/min, the coating density of the organic coating is 1 mg/1540.25 mm², the thickness of the organic coating is 30µm. After drying, the organic coating on the inorganic coating and the separator substrate has a form of island and linear morphology, the organic coating covers 50% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are wound into a lithium ion battery cell. The electrolyte is injected. After packaging, molding, and formation processes, a lithium-ion battery is obtained.

Referring to Table 5, preparation of embodiments 5-2 to 5-3 and comparative embodiments 5-1 to 5-2 is similar to that of embodiment 5-1, wherein, the separator substrate, the thickness of the substrate, the thickness of the inorganic coating, the thickness of the organic coating, the coating density of the organic coating are the same as the separator substrate, the thickness of the substrate, the thickness of the inorganic coating, the thickness of the organic coating, the coating density of the organic coating in embodiment 5-1, except for the content of the binder in the organic coating.

**Table 5 Effect of content of the binder in the organic coating**

| | Experimental group and process parameters | | | | | | Experimental results | | |
|---|---|---|---|---|---|---|---|---|---|
| | Separator substrate | Thickness of the substrate (µm) | thickness of the inorganic coating (µm) | Thickness of the organic coating (µm) | Content of the binder (wt %) | Coating density of the organic coating (mg/mm²) | Lithium precipitation (10°C @0.35C/0.5C) | Gap providing ability of the battery cell (µm) | Cycle life (60deg @2C/3C ) |
| Embodiment 5-1 | PE | 16 | 4 | 30 | 5% | 1/1540.25 | No lithium precipitation at low temperature | 30 | 600 |
| Embodiment 5-2 | PE | 16 | 4 | 30 | 45% | 1/1540.25 | No lithium precipitation at low temperature | 50 | 800 |
| Embodiment 5-3 | PE | 16 | 4 | 30 | 95% | 1/1540.25 | No lithium precipitation at low temperature | 60 | 1000 |
| Comparative embodiment 5-1 | PE | 16 | 4 | 30 | 98% | 1/1540.25 | Slight lithium precipitation at low temperature | 60 | 300 |
| Comparative embodiment 5-2 | PE | 16 | 4 | 30 | 1% | 1/1540.25 | Slight lithium precipitation at low temperature | 5 | 200 |

As can be seen from Table 5, on condition that the separator substrate, the thickness of the substrate, the thickness of the inorganic coating, the thickness of the organic coating, the coating density of the organic coating are the same, different contents of binder in the organic coating affect the gap providing ability of the separator, the ability of enduring expansion force of the battery cell, and the cycle capacity of the lithium ion battery as following.
1. When the content of the binder in the organic coating is too high (more than 95wt%), in the coating process, the binder forms a film on the surface of the separator, the ions cannot pass through the porous separator freely. Lithium precipitation at low temperature occurs at the separator. Contribution of the organic coating to the improvement of the cycle capability of the lithium ion battery is reduced;
2. When the content of the binder in the organic coating is too low (less than 5wt%), the powder of the coated organic coating is readily to peel off. The actual gap providing ability is hard to assess. Contribution of the organic coating to the circle life of the lithium ion battery is reduced;
3. When the content of the binder in the organic coating is between 5wt%-95wt%, island and/or strip morphology coating of the organic coating has expected gap providing ability. The organic coating can endure higher expansion force. No lithium precipitation at low-temperature occurs at the anode plate. The circle life of the lithium ion battery is improved.

### Embodiments 6-1 to 6-3 and comparative embodiments 6-1 to 6-2

### Embodiment 6-1

Preparation of the anode plate: uniformly mixing anode active material NCM (N: C: M=4: 3: 3), conducting agent conductive carbon, and binder polyvinylidene fluoride (PVDF) at a weight ratio of 96: 2: 2 and obtaining the anode slurry of the lithium ion battery; evenly coating the anode slurry on an anode current collector of aluminum foil; drying the anode current collector coated with the anode slurry at 85°C, cold pressing the anode current collector, and cutting and slitting the anode current collector; drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector dried at 85°C; drying the cut current collector at 110°C for 4 hours under vacuum condition; and then welding cathode leads, so as to obtain the cathode plate of the lithium ion battery.

Preparation of the separator: using a polyethylene microporous film having a thickness of 5µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer and dispersing the mixture at 25°C for 3 hours;
Step 2: adding 30 Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, and the coating density is 5mg/cm². The thickness of the inorganic coating is 2µm. The inorganic coating covers 60% of the porous separator substrate.

Preparation of the organic coating slurry: the organic coating slurry contains 5 parts by weight of vinylidene fluoride-hexafluoropropylene polymer, 40 parts by weight of polyamide and 55 parts by weight of polyacrylonitrile. The method for preparing the organic coating slurry includes the steps of:
Step 1: adding 95 Kg of the above-mentioned mixture of polyamide and polyacrylonitrile into a 100 L double-planetary mixer and dispersing the mixture at 25°C for 1.5 hours;
Step 2: adding 5 Kg of the vinylidene fluoride-hexafluoropropylene polymer into the mixture and dispersing the mixture at 35°C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the inorganic coating in an oven having a length of 10m and a temperature of 55°C. The coating speed is 25 m/min, the coating density of the organic coating is 0.75 mg/1540.25 mm², the thickness of the organic coating is 10µm. After drying, the organic coating on the inorganic coating and the separator substrate has a form of island and linear morphology, the organic coating covers 30% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are wound into a lithium ion battery cell. The electrolyte is injected. After packaging, molding, and formation processes, a lithium-ion battery is obtained.

Referring to Table 6, preparation of embodiments 6-2 to 6-3 and comparative embodiments 6-1 to 6-2 is similar to that of embodiment 6-1, wherein, the separator substrate, the thickness of the inorganic coating, the thickness of the organic coating, the coating density of the organic coating are the same as the separator substrate, the thickness of the inorganic coating, the thickness of the organic coating, the coating density of the organic coating in embodiment 6-1, except for the thickness of the substrate.

**Table 6 Effect of the thickness of the substrate**

| | Experimental group and process parameters | | | | | Experimental results | | |
|---|---|---|---|---|---|---|---|---|
| | Separator substrate | Thickness of the substrate (µm) | Thickness of the inorganic coating (µm) | Thickness of the organic coating (µm) | Coating density of the organic coating (mg/mm²) | Lithium precipitation (10°C @0.35C/0.5C) | Gap providing ability of the battery cell (µm) | Cycle life (60deg@2 C/3C) |
| Embodiment 6-1 | PE | 5 | 2 | 10 | 0.75/1540.25 | No lithium precipitation at low temperature | 12µm | 500 |
| Embodiment 6-2 | PE | 20 | 2 | 10 | 0.75/1540.25 | No lithium precipitation at low temperature | 16µm | 600 |
| Embodiment 6-3 | PE | 40 | 2 | 10 | 0.75/1540.25 | No lithium precipitation at low temperature | 20µm | 800 |
| Comparative embodiment 6-1 | PE | 50 | 2 | 10 | 0.75/1540.25 | slight lithium precipitation at low temperature | 20µm | 300 |
| Comparative embodiment 6-2 | PE | 3 | 2 | 10 | 0.75/1540.25 | No lithium precipitation at low temperature | 10µm | 400 |

As can be seen from Table 6, on condition that the separator substrate, the thickness of the inorganic coating, the thickness of the organic coating, the coating density of the organic coating are the same, different thickness of the substrate affects the gap providing ability and the cycle capacity of the lithium-ion battery as following.
1. The thicker the separator substrate is, the less likely the island and/or the stripe coating of the organic coating affects the formation of slight wrinkle on the substrate. The actual value of gap providing ability becomes closer to the theoretical value.
2. When the separator substrate is too thick (more than 40µm), the organic coating can increase the ability of enduring expansion force of the lithium ion battery. However, if the substrate is too thick, in view of the effect of the thickness of the organic coating, the ion conductivity of the porous separator will decrease during the charging and discharging process of the lithium ion battery, which will lead to slight or serious lithium precipitation at low temperature, and contribution of the island and/or strip morphology coating of the organic coating to the improvement of the cycle capability of the lithium ion battery is reduced.
3. When the separator substrate is too thin (less than 5µm), island and/or strip morphology coating of the organic coating has great effect on the formation of the slight wrinkle on the substrate. The actual gap providing ability is of the battery cell is too poor. The organic coating can only endure lower expansion force and, therefore, can hardly contribute to the improvement of the cycle capacity of the lithium-ion battery;
4. When the thickness of the separator substrate is between 5µm-40µm, island and/or strip morphology coating of the organic coating has less effect on the formation of slight wrinkle on the substrate. At a certain coating density of the organic coating, desirable gap providing ability can be achieved. The organic coating can endure higher expansion force. No lithium precipitation at low-temperature occurs at the anode plate. Cycle capability of the lithium ion battery is improved.

### Embodiments 7-1 to 7-3 and comparative embodiments 7-1 to 7-2

### Embodiment 7-1

Preparation of the anode plate: uniformly mixing anode active material NCM (N: C: M=4: 3: 3), conducting agent conductive carbon, and binder polyvinylidene fluoride (PVDF) at a weight ratio of 96: 2: 2 and obtaining the anode slurry of the lithium ion battery; evenly coating the anode slurry on an anode current collector of aluminum foil; drying the anode current collector coated with the anode slurry at 85°C, cold pressing the anode current collector, and cutting and slitting the anode current collector; drying the anode current collector at 85°C for 4 hours under vacuum condition; and then welding anode leads, so as to obtain the anode plate of the lithium ion battery.

Preparation of the cathode plate: uniformly mixing cathode active material graphite, conducting agent conductive carbon, thickener sodium hydroxymethyl cellulose (CMC), and binder styrene-butadiene rubber (SBR) at a weight ratio of 97: 1: 1: 1 and obtaining the cathode slurry of the lithium ion battery; evenly coating the cathode slurry on a cathode current collector of copper foil; drying the cathode current collector coated with the cathode slurry at 85°C; cutting the cathode current collector after the cathode current collector dried at 85°C; drying the current collector at 110°C for 4 hours under vacuum condition; and then welding cathode leads, so as to obtain the cathode plate of the lithium ion battery.

Preparation of the separator: using a polyethylene microporous film having a thickness of 16µm as the porous separator substrate.

Preparation of the inorganic coating slurry: the inorganic coating slurry contains 30 parts by weight of inorganic aluminum oxide powder, 10 parts by weight of polyvinylpyrrolidone and 60 parts by weight of acetone solvent. The method for preparing the inorganic coating slurry including the steps of:
Step 1: adding 70 Kg of the above-mentioned mixture of polyvinylpyrrolidone and acetone into a 100 L double-planetary mixer and dispersing the mixture at 25°C for 3 hours;
Step 2: adding 30 Kg of the above-mentioned aluminum oxide powder into the mixer in step 1, dispersing the mixture at 35°C at a high speed for 3 hours, and then slowly stirring the mixture at a low speed for 1.5 hours to obtain the inorganic coating slurry.

Preparation of the inorganic coating: coating the surface of the porous separator substrate via dip coating method and obtaining a single-sided coating structure; drying the separator substrate in an oven having a length of 10m and a temperature of 55°C. The coating speed is 25m/min, and the coating density is 5mg/cm². The thickness of the inorganic coating is 1µm. The inorganic coating covers 60% of the porous separator substrate.

Preparation of the organic coating slurry: the organic coating slurry contains 20 parts by weight of vinylidene fluoride-hexafluoropropylene polymer, 40 parts by weight of polyamide and 40 parts by weight of polyacrylonitrile. The method for preparing the organic coating slurry includes the steps of:
Step 1: adding 80 Kg of the above-mentioned mixture of polyamide and polyacrylonitrile into a 100 L double-planetary mixer and dispersing the mixture at 25°C for 1.5 hours;
Step 2: adding 20 Kg of vinylidene fluoride-hexafluoropropylene polymer into the mixture and dispersing the mixture at 35°C at a high speed for 3 hours, and obtaining the organic coating slurry.

Preparation of the organic coating: coating two surfaces of the porous separator substrate surface-treated with the inorganic coating via gravure coating method, with the weight and thickness of the organic coating on both surfaces are the same; drying the separator substrate coated with the inorganic coating in an oven having a length of 10m and a temperature of 55°C. The coating speed is 25 m/min, the coating density of the organic coating is 1mg/1540.25 mm², the thickness of the organic coating is 10µm. After drying, the organic coating on the inorganic coating and the separator substrate has a form of island and linear morphology, the organic coating covers 80% of the porous separator substrate.

Preparation of the electrolyte: dissolving lithium hexafluorophosphate in a mixed solvent of ethylene carbonate, dimethyl carbonate and methyl ethyl carbonate (the volume ratio of ethylene carbonate, dimethyl carbonate, and methyl ethyl carbonate is 1: 2: 1), and obtaining the electrolyte.

Preparation of the lithium ion battery: The anode plate, the cathode plate and the separator are wound into a lithium ion battery cell. The electrolyte is injected. After packaging, molding, and formation processes, a lithium ion battery is obtained.

Referring to Table 7, preparation of embodiments 7-2 to 7-3 and comparative embodiments 7-1 to 7-2 is similar to that of embodiment 7-1, wherein, the separator substrate, the thickness of the substrate, the thickness of the organic coating, the coating density of the organic coating are the same as the separator substrate, the thickness of the substrate, the thickness of the organic coating, the coating density of the organic coating in embodiment 7-1, except for the thickness of the inorganic coating.

**Table 7 Effect of the thickness of the inorganic coating**

| | Experimental group and process parameters | | | | | Experimental results | | |
|---|---|---|---|---|---|---|---|---|
| | Separator substrate | Thickness of the substrate (µm) | Thickness of the inorganic coating (µm) | Thickness of the organic coating (µm) | Coating density of the organic coating (mg/mm²) | Lithium precipitation (10°C @0.35C/0.5C) | Gap providing ability of the battery cell (µm) | Cycle life (60deg@2 C/3C) |
| Embodiment 7-1 | PE | 16 | 1 | 10 | 0.75/1540.25 | No lithium precipitation at low temperature | 14 | 400 |
| Embodiment 7-2 | PE | 16 | 5 | 10 | 0.75/1540.25 | No lithium precipitation at low temperature | 18 | 600 |
| Embodiment 7-3 | PE | 16 | 10 | 10 | 0.75/1540.25 | No lithium precipitation at low temperature | 20 | 800 |
| Comparative embodiment 7-1 | PE | 16 | 15 | 10 | 0.75/1540.25 | slight lithium precipitation at low temperature | 20 | 300 |
| Comparative embodiment 7-2 | PE | 16 | 0 | 10 | 0.75/1540.25 | No lithium precipitation at low temperature | 2 | 300 |

As can be seen from Table 7, on condition that the separator substrate, the thickness of the substrate, the thickness of the organic coating, the coating density of the organic coating are the same, different thickness of the inorganic coating affects the gap providing ability of the separator and the cycle capacity of the lithium ion battery as following.
1. When the thickness of the inorganic coating is too big (more than 10µm), the actual gap providing ability accords with the theoretical value. The organic coating can make the lithium ion battery endure higher expansion force. However, because the inorganic coating is too thick, the ion-conductivity of the separator during the charging and discharging process of the lithium ion battery will decrease. Contribution of the inorganic coating to the improvement of the cycle capability of the lithium ion battery is reduced;
2. When the thickness of the inorganic coating is too small (less than 1µm), in the coating process, island and/or strip morphology coating of the organic coating has great effect on the formation of slight wrinkle on the substrate. The actual gap providing ability of the battery cell is poor. Preserved space of the organic coating for the cycle expansion of the lithium-ion battery is reduced. Contribution to the improvement of the cycle capacity of lithium ion battery is decreased;
3. When the thickness of the inorganic coating is between 1µm-10µm, in the coating process, island and/or strip morphology coating of the organic coating has tiny effect on the formation of slight wrinkle on the substrate. Expected gap providing ability can be achieved. The organic coating can endure higher expansion force. No lithium precipitation at low temperature occurs at the anode plate. The circle capacity of the lithium ion battery is improved.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A separator (10) for a lithium ion battery, comprising a substrate (12) and an organic coating (16) disposed directly or indirectly on at least one surface of the substrate (12), wherein a coating density of the organic coating (16) is 0.1mg/1540.25mm²~10mg/1540.25mm².

2. The separator of claim 1, wherein the organic coating (16) comprises organic polymer particles and/or organic polymer emulsion and binder.

3. The separator of claim 2, wherein a particle size D50 of the organic polymer particles and/or organic polymer emulsion is 1µm~150µm, and crystallinity of the organic polymer particles and/or organic polymer emulsion is less than 85%.

4. The separator of claim 2, wherein a weight content of the organic polymer particles and/or organic polymer emulsion is 5%~95% and a weight content of the binder is 5%~95%.

5. The separator of claim 2, wherein the organic polymer particles and/or organic polymer emulsion are selected from a group consisting of polyvinylidene fluoride, vinylidene fluoride-hexafluoropropylene polymer, styrene butadiene polymer and polyacrylic acid, and the binder is selected from a group consisting of polyamide, polyacrylonitrile, polyacrylic ester, polyacrylate, hydroxy methyl cellulose, polyvinyl pyrrolidone, ethyl acetate, phenyl ether, polyvinyl ether, vinyl carbonate, glycerol polyglycidyl ether, propylene carbonate, acetone, and pure acrylic emulsion.

6. The separator of claim 1, wherein the substrate (12) is PE, PP, non-woven fabrics, PET, PVDF, PU, PA, PI, organic and inorganic blend membrane, or PP/PE/PP.

7. The separator of any one of claims 1 to 6, wherein at least one surface of the substrate (12) is coated with an inorganic coating (14), the organic coating (16) is disposed on at least one surface of the inorganic coating (14), and the organic coating (16) has a gap providing ability of 1~150µm for a winded and heat pressed battery cell.

8. The separator of claim 7, wherein the organic coating (16) covers 1%~95% of the surface of the substrate (12) or the inorganic coating (14).

9. The separator of claim 7, wherein the inorganic coating (14) comprises inorganic particles and binder, a weight content of the inorganic particles is 5~95wt%, and a weight content of the binder is 5~95wt%.

10. A lithium ion battery, comprising a cathode plate, an anode plate, a separator (10) between the cathode plate and the anode plate, wherein the separator (10) is the separator of any one of claims 1 to 9.
